# EUROPÄISCHE PATENTANMELDUNG

(11) **EP 3 125 385 A1**
(43) Veröffentlichungstag der Anmeldung: **01.02.2017**
(21) Anmeldenummer: 15179401.3
(22) Anmeldetag: 31.07.2015
(51) Int. Cl.: H02G 5/00, H02G 5/06

(54) **STROMSCHIENE UND STROMSCHIENENSYSTEM**

(71) Anmelder: Zurecon AG, 9053 Teufen AR (CH)
(72) Erfinder: Pfluger, Gerd, 4625 Oberbuchsiten (CH)
(74) Vertreter: Rutz & Partner

(57) **Zusammenfassung**

Die Stromschiene (1) umfasst Leitungsstäbe (11),
a) die einen zumindest annähernd rechteckförmigen Querschnitt mit einer längeren Rechteckseite (11) und einer kürzeren Rechteckseite (12) aufweisen;
b) die von einem ersten Anschlussbereich (A) an einem ersten Endstück (1A) der Stromschiene (1, 1') zu wenigstens einem zweiten Anschlussbereich (B) an einem zweiten Endstück (1B) der Stromschiene (1) geführt sind;
c) die endseitig erste und zweite Anschlüsse (11A, 11B) bilden; und
d) die derart in einen Stromschienenkörper (10) eingegossen sind, dass zumindest die ersten und zweiten Anschlüsse (11A, 11B) frei liegen.

Erfindungsgemäss sind die Leitungsstäbe (11) im ersten Anschlussbereich (A) und die Leitungsstäbe (11) im zweiten Anschlussbereich (B) vorzugsweise um 90° je um eine Biegeachse umgebogen, so dass die ersten und zweiten Anschlüsse (11A, 11B) auf die eine oder andere Seite des Stromschienenkörpers (10) ausgerichtet und zur seitlichen Kontaktierung einer weiteren Stromschiene (1') vorgesehen sind.

## Beschreibung

Die Erfindung betrifft eine Stromschiene und ein Stromschienensystem zur Energieverteilung in einem Gebäude.

Für die Übertragung von Strom mit hoher Leistung, hoher Sicherheit und Zuverlässigkeit werden Stromschienen als Übertragungsleitungen zwischen Transformatoren, Haupt- und Unterverteilern in Fabrikhallen, Gewerbe- und Verwaltungsgebäuden oder auch als Steigleitungen in Hochbauten eingesetzt. Stromschienen und deren Verwendung sind z.B. in [1], Produktkatalog "Niederspannungs-Schienenverteiler LANZ HE 2.5.2" der LANZ OENSINGEN AG vom September 2009 beschrieben. Stromschienen dieser Art werden auch als Schienenverteiler bezeichnet.

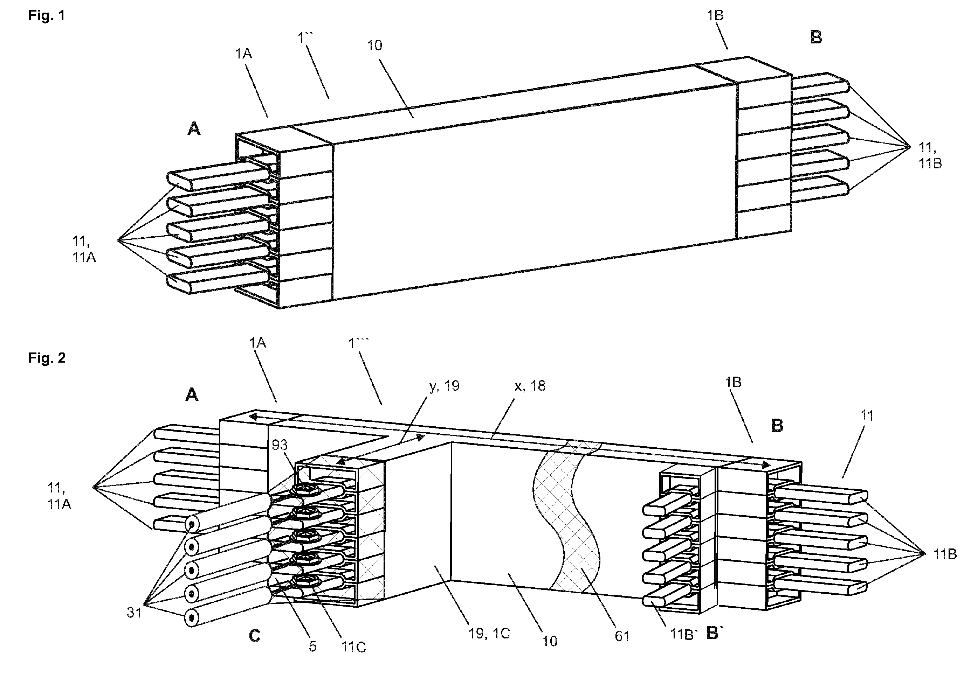

Fig. 1 zeigt nachstehend eine bekannte Stromschiene 1" mit fünf in einem Isolationskörper 10 eingegossenen Leitungsstäben 11, die durch zwei Endstücke 1A, 1B zu je einem Anschlussbereich A, B verlaufen und dort unbearbeitete Anschlüsse 11A, 11B aufweisen.

[2], EP1928066A2, offenbart ein Verfahren zur Verbindung von Stromschienen, bei dem die Enden der elektrischen Leiter beider Stromschienenelemente miteinander verbunden und anschliessend vergossen werden.

Die Leitungsstäbe qualitativ hochwertiger Stromschienen sind in Giessharz oder Epoxyzement bzw. Polymerbeton eingegossen und erreichen dadurch den Schutzgrad IP68. In dieser Ausgestaltung werden die Stromschienen auf Erdbebensicherheit, Schocksicherheit und Funktionserhalt im Brandfall ausgelegt. D.h., weder elektrische, mechanische, thermische oder chemische Einwirkungen, insbesondere auch kein Druckwasser, können die Betriebssicherheit der Stromschienen gefährden. Mit den Stromschienen kann daher ein maximaler Sicherheitsstandard eingehalten werden. Ferner kann ein hoher Standard für den Funktionserhalt im Brandfall, wie F90, eingehalten werden. Oft werden Stromschienen mit einer Abschirmung versehen, mittels der niederfrequente magnetische Wechselfelder abgeschirmt und Normen der Serie EN 61000 eingehalten werden.

Stromschienen sind ferner aus [3], Produktkatalog von Eta-com: "Cast Resin Insulated Busway System", 27.11.2014, bekannt.

Aus [4], E-LINE MK Busbar Systems 100-160-225A, www.eae.com.tr, sind Anschlusskästen bekannt, bei denen Anschlusskontakte von Stromschienen mittels Federkontakten von Steckverbindungen kontaktiert werden. Derartige Anschlusskästen sind voluminös und aufwendig zu montieren und bilden aufgrund der zahlreichen Federkontakte eine Schwachstelle im Stromschienensystem. Mit Anschlusskästen lässt sich zudem der höchste Schutzgrad IP 68, insbesondere der Schutz gegen einwirkendes Druckwasser, kaum einhalten. In Steigzonen von Gebäuden sind normalerweise Leitungsschächte vorgesehen, in denen die Stromschienen vertikal nach oben geführt werden. In diesen Leitungsschächten steht wenig Raum zur Verfügung, weshalb Montage und Wartung der Anschlusskästen erheblichen Aufwand verursachen.

Allgemein ist zu beachten, dass ein Energieversorgungsstrang stets so gut ist wie sein schwächstes Glied. Dies gilt für die Funktionsfähigkeit, aber auch für alle wichtigen Nebenfaktoren, wie die Einhaltung der Eigenschaften, die durch die Normen IP 68, F90 (Funktionserhalt im Brandfall) und EN 61000 (EMV- Verträglichkeit) gefordert sind. Der korrekten Verbindung der Stromschienen kommt daher eine grosse Bedeutung zu.

Zur Verbindung von zwei Stromschienen gemäss Fig. 1 werden z.B. die in [1], Seiten 2 und 5 beschrieben Stromschienenkupplungen wie sie verwendet. Diese Stromschienenkupplungen umfassen Kontaktlaschen, massive Pressplatten aus verzinktem Stahl, Isolationsplatten, stabile Spannschrauben sowie ein Kupplungsgehäuse. Die Spannschrauben, die zum Festziehen aller Kontaktlaschen und Pressplatten dienen, werden mit einem Drehmomentschlüssel festgezogen, wodurch verhindert werden soll, dass die Spannschrauben überdehnt und/oder die Platten deformiert werden, woraus eine ungenügende Kontaktierung resultiert. Eine mangelhafte Kontaktierung kann auch aus der Verwendung von nur einer oder zwei Spannschrauben resultieren, die für den gesamten Verbindungsblock verwendet werden. Nachteilig ist ferner, dass die optische Kontrolle der nahe beabstandeten Anschlüsse kaum möglich ist, weshalb mangelhafte Kontaktierungen auch aufgrund verschmutzter Kontakte auftreten können. Diese Probleme werden bei der ersten Montage normalerweise gut beherrscht. Bei der Revision der Vorrichtung mit Demontage der Stromschienenkupplungen erfolgt die Montage oft nicht nach Vorschrift und nicht mit dem Drehmomentschlüssel und dem geforderten Drehmoment, weshalb die genannten Probleme verstärkt auftreten können.

Diese Art der Verbindung, die aufgrund des geringen Abstands zwischen den einzelnen Leitern der Stromschiene gewählt wird, ist daher aufwendig und kostspielig.

Nachteilig ist ferner, dass die Verbindungen zwischen den Stromschienen in einem schwierigen Umfeld, z.B. in einem Leitungsschacht, nicht leicht erstellt werden können. Ferner sind Verzweigungen nicht leicht realisierbar. Zur Realisierung eines Leitungsgastes kann die Stromschiene von Fig. 1 mit einem Leitungsast mit elektrischen Leitern versehen werden, die mit den vorliegenden Leitungsstäben verschweisst oder verschraubt werden. Diesbezüglich resultiert wiederum ein entsprechender Aufwand.

Zu beachten ist ferner, dass die Fertigung der Stromschienen von Fig. 1 ein relativ aufwändiges Giessverfahren erfordert.

Weiterhin ist die Stromschiene von Fig. 1 nicht einfach handhabbar. Falls die Stromschiene am Stromschienenkörper aufgehängt wird, ist darauf zu achten, dass die endseitigen Anschlüsse 11A, 11B nicht an der Schachtwand anschlagen.

Die Installation dieser Stromschienen insbesondere in einem Leitungsschacht ist daher nicht leicht möglich. Entsprechende Stromschienensysteme sind daher nur mit relativ grossem Aufwand realisierbar.

Der vorliegenden Erfindung liegt daher die Aufgabe zugrunde, eine verbesserte Stromschiene und ein verbessertes Stromschienensystem zu schaffen.

Insbesondere ist eine Stromschiene zu schaffen, die einfach und kostengünstig herstellbar und einfach handhabbar ist.

Die Stromschiene soll in einfacher Weise mit weiteren Stromschienen oder mit weiteren elektrischen Vorrichtungen, insbesondere Anschlusskabel, verbindbar sein und dazu mit vorteilhaften Anschluss- und Verbindungsmöglichkeiten realisierbar sein.

Auf die Verwendung aufwändiger Verbindungsvorrichtungen und entsprechender Verbindungsarbeiten soll verzichtet werden können. Insbesondere soll auf die Verwendung eines Drehmomentschlüssels verzichtet werden können. Trotzdem soll die Qualität der resultierenden Verbindungen verbessert und zuverlässige realisiert werden. Die Verbindungen sollen auch nach mehrmaliger Demontage und Montage der Verbindungsvorrichtung bzw. Stromschienenkupplung mit unverändert hoher Qualität erstellt werden können.

Die Anschlüsse der Stromschienen sollen optisch leicht kontrolliert und gewartet werden können. Ferner soll für die Montage der Anschlüsse genügend Raum zur Verfügung stehen. Die Kontaktierung soll in hoher Qualität mit hohem und gleichmässigem Anpressdruck realisierbar sein.

Ferner ist ein Stromschienensystem zu schaffen, das unter Wahrung eines einheitlich hohen Qualitätsstandards, z.B. Schutzgrad IP 68 und Brandsicherheit F90, mit reduziertem Aufwand und reduzierten Kosten erstellt werden kann.

Dazu sollen die Stromschienen auch in einem schwierigen und beengten Umfeld vorteilhaft gehandhabt werden können.

In Leitungsschächten, z.B. in Steigzonen, in denen kritische Raumverhältnisse vorliegen und Wartungsarbeiten nur schwierig durchführbar sind, soll maximale Sicherheit gewährleistet werden. Ferner ist die Zugänglichkeit zu den Leitungen im Leitungsschacht bzw. ein möglichst grosser Sicherheitsabstand zu gewährleisten.

Das erfindungsgemässe Stromschienensystem soll auch dann einen sicheren Betrieb gewährleisten, wenn Temperaturschwankungen auftreten, die gegebenenfalls durch einen Brand verursacht werden.

Diese Aufgabe wird mit einer Stromschiene und einem Stromschienensystem gelöst, welche die in Anspruch 1 bzw. 9 angegebenen Merkmale aufweisen. Vorteilhafte Ausgestaltungen der Erfindung sind in weiteren Ansprüchen angegeben.

Die erfindungsgemässe Stromschiene umfasst Leitungsstäbe,
a) die einen zumindest annähernd rechteckförmigen Querschnitt mit einer längeren Rechteckseite und einer kürzeren Rechteckseite aufweisen;
b) die von einem ersten Anschlussbereich an einem ersten Endstück der Stromschiene zu wenigstens einem zweiten Anschlussbereich an einem zweiten Endstück der Stromschiene geführt sind;
c) die endseitig erste und zweite Anschlüsse bilden; und
d) die derart in einen Stromschienenkörper eingegossen sind, dass zumindest die ersten und zweiten Anschlüsse frei liegen.

Erfindungsgemäss sind die Leitungsstäbe im ersten Anschlussbereich und die Leitungsstäbe im zweiten Anschlussbereich je um eine Biegeachse umgebogen, so dass die ersten und zweiten Anschlüsse auf die eine oder andere Seite des Stromschienenkörpers ausgerichtet und zur seitlichen Kontaktierung einer weiteren Stromschiene vorgesehen sind.

Die Leitungsstäbe bilden daher zumindest annähernd eine U-oder Z-Form. Die Anschlüsse sind vorzugsweise um 90° gebogen. Eine Biegung kann jedoch vorteilhaft im Bereich von 45° bis 90° erfolgen. Durch diese Ausgestaltungen der Anschlüsse kann die Verbindung von zwei erfindungsgemässen Stromschienen erleichtert werden, die übereinander oder nebeneinander angeordnet sind. Die Anordnung der Stromschienen sich in den Anschlussbereichen überlappend und mit nebeneinander und parallel zueinander ausgerichteten Anschlüssen ist besonders vorteilhaft, da die Anschlüsse bequem mit Verbindungselementen sowie weiteren Stromschienen oder Anschlusskabeln verbunden werden können. Die Stromschiene können z.B. an eine Wand montiert und von der Frontseite her bequem bearbeitet werden. Da die Anschlüsse der Stromschiene vorzugsweise aus derselben Seite der Stromschiene hervortreten, kann diese auch einfach gefertigt werden. Die U-förmigen Leitungsstäbe werden beabstandet voneinander in eine Matrize eingefügt, wonach diese mit Giessharz oder Polymerbeton geführt wird. Die Matrize kann bei dieser Ausgestaltung der Stromschiene besonders einfach ausgebildet sein. Erfindungsgemässe Stromschienen können mit minimalem Aufwand rasch hergestellt werden.

Vorzugsweise sind die Leitungsstäbe derart gebogen, dass der Abstand d11 zwischen benachbarten Leitungsstäben ausserhalb des Stromschienenkörpers um einen Faktor n grösser ist, als der Abstand d111 zwischen benachbarten Leitungsstäben innerhalb des Stromschienenkörpers, wobei der Faktor n vorzugsweise in einem Bereich zwischen 1.5 und 5 liegt.

Die Biegung der Leitungsstäbe um die jeweilige Biegeachse erfolgt vorzugsweise um dasselbe Mass. Die Biegeachsen sind vorzugsweise in einem gleichmässigen Raster voneinander beanstandet und legen vorzugsweise in einer Ebene. Der Abstand zwischen zwei Biegeachsen bildet vorzugsweise die Hypotenuse eines Dreiecks, dessen Katheten die Abstände d11 und d111 sind.

Die Biegeachsen der Leitungsstäbe können wahlweise innerhalb oder ausserhalb des Stromschienenkörpers liegen. Alternativ kann auch ein Teil der Biegeachsen innerhalb und ein weiterer Teil der Biegeachsen ausserhalb des Stromschienenkörpers liegen.

Die Abstände der Anschlüsse in den beiden Anschlussbereichen A und B, die vorzugsweise innerhalb eines gleichmässigen Rasters liegen, werden derart gewählt, dass Verbindungsgarnituren, wie Schrauben und Schraubenmuttern, individuell für jedes Paar von Anschlüssen von zwei Stromschienen bequem montiert werden können. Dabei sollen für jedes Paar von Anschlüssen eine oder mehrere Verbindungschrauben montierbar sein, sodass eine optimale Kontaktierung der zu verbindenden Leiterpaare resultiert.

Die relativ weit voneinander beabstandeten Anschlüsse können daher vor der Installation in einfacher Weise optisch kontrolliert und gereinigt werden. Die Anschlüsse werden sodann individuell anhand von einer oder mehreren Schrauben verschraubt, sodass für jede einzelne Verbindung eine optimale Kontaktierung gewährleistet ist. Eine aufwändige Verbindungsvorrichtung sowie die Notwendigkeit der Verwendung eines Drehmomentschlüssels entfallen.

Die Anschlüsse sind unbearbeitete Endstücke der Leitungsstäbe oder bearbeitete Endstücke der Leitungsstäbe, die wenigstens eine erste Bohrung, gegebenenfalls eine Gewindebohrung, zur Aufnahme einer Verbindungsschraube aufweisen. Zusätzlich ist vorzugsweise eine zweite Bohrung, gegebenenfalls eine Gewindebohrung, zur Aufnahme einer Anschlussschraube vorgesehen, mittels der eine Anschlusskabel, gegebenenfalls ein Kabelschuh eines Anschlusskabels montierbar ist. Die ersten beiden Anschlussbereiche von erfindungsgemässen Stromschienen können daher mit weiteren Stromschienen sowie mit weiteren Anschlüssen, Stromschienen oder Anschlusskabeln, verbunden werden. Auf diese Weise können drei Stromschienen bedarfsweise zu einem T-Stück verbunden werden. Ordnungsgemäss kann daher ein beliebig verzweigtes Stromschienensystem aufgebaut werden, das insbesondere in vertikalen Leitungsschächten von Gebäuden vorteilhaft einsetzbar ist.

Zur Bildung eines Stromschienensystems werden die erfindungsgemässen Stromschienen vorzugsweise mit einem dritten und/oder einem vierten Anschlussbereich versehen.

Die ersten und zweiten Anschlüsse werden an der Frontseite und/oder der Rückseite des vorzugsweise quaderförmigen Stromschienenkörpers angeordnet. Die dritten und/oder vierten Anschlüsse werden um 90° versetzt an einer der Seiten zwischen der Frontseite oder Rückseite des Stromschienenkörpers angeordnet.

Die dritten und oder vierten Anschlüsse sind mit den Leitungsstäben vorzugsweise einstückig, durch eine Schraubverbindung oder durch Schweissen verbunden und vorzugsweise als Stäbe oder Schraubanschlüsse ausgebildet. Die vierten Anschlüsse in Form von Schraubanschlüssen werden vorzugsweise im Stromschienenkörper versenkt, sodass sie mit geringem Aufwand dicht abgeschlossen und bedarfsweise freigelegt werden können. Diese Anschlüsse können daher nicht nur bei der Installation, sondern auch zu einem späteren Zeitpunkt zur Erweiterung des Stromschienensystems verwendet werden. Die im Stromschienenkörper eingegossenen Schraubanschlüsse können vorteilhaft für die Montage von Anschlusskabeln verwendet werden.

In vorzugsweisen Ausgestaltungen ist der Stromschienenkörper einstückig mit wenigstens einem Formelement oder mit wenigstens einem eingesetzten Halteelement versehen, das an Formelemente oder Halteelemente benachbarter Stromschienen oder an Haltevorrichtungen oder Werkzeuge ankoppelbar ist, mittels denen die Stromschiene manipulierbar oder fixierbar ist. Z.B. ist der Stromschienenkörper an der Oberseite oder der Unterseite mit einem Haken versehen, der von einem Kran erfasst werden kann, mittels dessen die Stromschiene in einen Leitungsschacht abgesenkt werden kann. Auf diese Weise kann ein Stromschienensystem mit geringem Aufwand rasch innerhalb eines Gebäudes bzw. innerhalb eines Leitungsschachts aufgebaut werden.

Innerhalb des Stromschienensystems werden wenigstens zwei benachbarte Stromschienen durch eine Stromschienenkupplung miteinander verbunden, die wenigstens einen deformierbaren elektrischen Leiter aufweist, durch den die Anschlüsse der einander zugewandten Stromschienen derart miteinander verbunden sind, dass Temperaturdehnungen der Stromschienen kompensierbar sind.

Der wenigstens eine elastische elektrische Leiter ist vorzugsweise als elastischer Metallbügel oder als Metallband ausgebildet, das gegebenenfalls eine Laminatstruktur mit mehreren metallenen Lagen aufweist.

Die Kopplungsstellen zwischen den Stromschienen werden vorzugsweise durch eine Kopplungshülse überdeckt, welche auf jeder Seite mit dem zugehörigen Endstück der betreffenden Stromschiene vorzugsweise durch eine Schweissnaht, eine Gussverbindung, eine Rastvorrichtung oder eine formschlüssige Pressverbindung dicht abschliessend verbunden ist.

Vorzugsweise ist die Kopplungshülse als dehnbarer Balg ausgebildet, der den Bewegungen der Endstücke der Stromschienen folgen kann. Vorzugsweise ist die Kopplungshülse mit einer elastischen Dichtungsmasse, vorzugsweise einer Silikonmasse, zumindest teilweise gefüllt und dadurch dicht abgeschlossen.

In einem Leitungsschacht werden die Endstücke der Stromschienen, von denen Abzweigungen aus dem Leitungsschacht hinaus geführt werden vorzugsweise je von einer Stütze oder einem Element der Schachtmauer auf konstanter Höhe gehalten. Das elastisch mit der benachbarten Stromschiene verbundene Ende der kann sich hingegen in Funktion der Temperatur nach oben dehnen.

Stromschienen oder Kabel, die mit den dritten und oder vierten Anschlüssen verbunden und durch eine Öffnung aus dem Leitungsschacht hinaus geführt werden, sind daher vorzugsweise exzentrisch beim ersten oder zweiten Anschlussbereich angeordnet, der auf konstanter Höhe gehalten wird. Beim Auftreten von Temperaturdehnungen werden auf diese Stromschienen und Kabel keine Kräfte ausgeübt.

Das Stromschienensystem mit den erfindungsgemässen Stromschienen kann daher vorteilhaft für Gebäudeinstallationen insbesondere in Gebäuden Leitungsschächten verwendet werden, um von den Stromschienen abgezweigte elektrische Leitungen, die als Stromschienen oder Kabel ausgebildet sind, in vom Leitungsschacht getrennte Räume zu Energieabnehmern oder Energieverteilern zu führen.

Innerhalb des Leitungsschachts verlaufen somit nur die Stromschienen mit den vollständig eingegossenen Leitungsstäben und Kupplungsvorrichtungen. Das Auftreten einer Betriebsstörung des elektrischen Systems innerhalb des Leitungsschachts kann daher praktisch ausgeschlossen werden. Die Installation der Stromschiene innerhalb des Leitungsschachts ist zudem weitestgehend immun gegenüber Störungen benachbarter Systeme, z.B. eines Wasserrohrbruchs innerhalb des Leitungsschachts oder gegen Feuer. Der Funktionserhalt der Energieversorgung innerhalb des Gebäudes bleibt auch im Katastrophenfall zumindest über die erforderliche Dauer gewährleistet.

Das erfindungsgemässe Stromschienensystem ist homogen ausgebildet und frei von Schwachstellen. Gewährleistet sind die uneingeschränkte Funktionsfähigkeit, aber auch zumindest die Einhaltung der Eigenschaften, die durch die Normen IP 68 (u.a. Schutz gegen Druckwasser), F90 (Funktionserhalt im Brandfall) und EN 61000 (EMV- Verträglichkeit) gefordert sind, bis zum elektrischen Verbraucher.

Nachfolgend wird die Erfindung anhand von Zeichnungen näher erläutert. Dabei zeigt:
- Fig. 1: eine bekannte Stromschiene 1" mit fünf in einem Isolationskörper 10 eingebetteten Leitungsstäben 11, die in Endstücken 1A, 1B zu einem ersten und einem zweiten Anschlussbereich A, B geführt sind und dort unbearbeitete Anschlüsse 11A, 11B aufweisen;
- Fig. 2: eine Stromschiene 1'" mit fünf in einem Isolationskörper 10 eingegossenen Leitungsstäben 11, die innerhalb eines entlang einer Längsachse x ausgerichteten Leitungsstamms 18 zu zwei ersten Endstücken 1A, 1B mit Anschlussbereichen A, B und entlang einer Querachse y in einem senkrecht dazu ausgerichteten Leitungsast 19 zu einem dritten Endstück 1C mit einem Anschlussbereich C verlaufen;
- Fig. 3a: eine Stromschiene 1 mit U-profilförmigen Leitungsstäben 11, die in den Anschlussbereichen A bzw. B zur Seite gebogen sind und seitlich aus dem Stromschienenkörper 10 hervortreten;
- Fig. 3b: den ersten und den fünften Leitungsstab 11 der Stromschiene 1 von Fig. 3a, die einstückig miteinander verbundene Anschlüsse 11A, 11B, 11C und 11D aufweist;
- Fig. 4: eine erfindungsgemässe Stromschiene 1 mit vier Leitungsstäben 11, die unten und oben axial aus den Endstücken 1A, 1B nach aussen treten und ausserhalb des Stromschienenkörpers 10 um 90° in dieselbe Richtung gebogen sind und in den Anschlussbereichen A und B parallel zueinander verlaufen.
- Fig. 5a: die Endstücke 1A, 1B von zwei miteinander verbundenen Stromschienen 1, 1' gemäss Fig. 3a, deren erste bzw. zweite Anschlüsse 11A, 11B, die gegeneinander gerichtet sind, miteinander sowie mit dritten Anschlüssen 11C verbunden sind;
- Fig. 5b: die Endstücke 1A, 1B von zwei miteinander verbundenen Stromschienen 1, 1' gemäss Fig. 3a, deren erste bzw. zweite Anschlüsse 11A, 11B, die parallel zueinander ausgerichtet sind, miteinander sowie mit dritten Anschlüssen 11C verbunden sind;
- Fig. 6a: eine erfindungsgemässe Gebäudeinstallation 1000 mit fest miteinander verbundenen Stromschienen 1, 1', gemäss Fig. 3a;
- Fig. 6b: eine erfindungsgemässe Gebäudeinstallation 1000 mit elastisch miteinander verbundenen Stromschienen 1, 1' gemäss Fig. 3a; und
- Fig. 7: ein erfindungsgemässes Stromschienensystem 100 für die Energieverteilung in einem Gebäude 8 bzw. eine Gebäudeinstallation 1000 mit mehreren Stromschienen 1, die durch elastische Stromschienenkupplungen 9 miteinander verbunden sind und die je drei Endstücke 1A, 1B, 1C aufweisen, die einen in einem Leitungsschacht 80 geführten Leitungsstamm 18 und Leitungsäste 19 bilden, die durch Maueröffnungen 820 hindurch je in eine Gebäudeetage 831, ..., 834 geführt werden;

Fig. 1 zeigt die eingangs beschriebenen bekannte Stromschiene 1", die fünf in einem Isolationskörper 10 eingegossene Leitungsstäbe 11 aufweist, die beidseits durch zwei Endstücke 1A, 1B zu je einem Anschlussbereich A und B verlaufen und dort unbearbeitete Anschlüsse 11A, 11B bilden.

Fig. 2 zeigt eine Stromschiene 1"' mit fünf in einem Isolationskörper 10 eingegossenen Leitungsstäben 11, die innerhalb eines entlang einer Längsachse y ausgerichteten Leitungsstamms 18 zwischen einem ersten und einem zweiten Endstück 1A, 1B mit Anschlussbereichen A und B und in einem senkrecht dazu ausgerichteten Leitungsast 19 zu einem dritten Endstück 1C mit einem Anschlussbereich C verlaufen. Die Leitungsstäbe 11 des Leitungsstamms 18 und des daran anschliessenden Leitungsasts 19 sind in einem gemeinsamen Stromschienenkörper 10, vorzugsweise in einem Isolationskörper aus Isolationsmaterial, wie Giessharz oder Polymerbeton, eingegossen. Die Leitungsstäbe 11 des Leitungsstamms 18 und des Leitungsasts 19 sind entweder einstückig ausgebildet, miteinander verschweisst oder miteinander verschraubt. Die Stromschiene 1"' weist daher über den gesamten Bereich bis zu jeder Extremität dieselbe hohe Qualität auf.

Am zweiten Endstück 1B sind zwei Anschlussbereiche B und B' vorgesehen, an denen Anschlüsse 11B, 11B" der Leitungsstäbe 11 parallel und senkrecht zur Stromschienenachse x aus dem Stromschienenkörper 10 austreten. Z.B. ist es auch möglich Blindanschlüsse vorzusehen, die nach der Installation bei Bedarf genutzt werden können.

Vom Leitungsstamm 18 der Stromschienen 1 wird ein Leitungsast 19 weggeführt. Dieser Leitungsast 19 kann vorteilhaft aus dem Leitungsschacht hinaus in einen Gebäuderaum geführt werden. Dort sind die Anschlüsse 11C der Leitungsstäbe 11 des Leitungsasts 19 mit Endstücken von Anschlussleitungen 31, ..., 35 verbunden. Die Endstücke der Anschlussleitungen 31, ..., 35 werden mit den Leitungsstäben 11, ..., 15 verschweisst oder, wie gezeigt, mittels Schrauben 93 verschraubt und vergossen, wodurch ein Abschlusskopf 5 gebildet wird. Zur Aufnahme der Schrauben 93 können die Anschlüsse 11C mit Bohrungen 990 versehen werden, die z.B. ein Gewinde aufweisen (siehe Fig. 11).

Der Leitungsstamm 18 kann auf wenigstens einer Seite mit einer oder mehreren Leitungsästen bzw. Anschlussbereichen versehen sein. Die Stromschienen 1"' können daher bedarfsweise an jede Struktur eines Gebäudes und eines Leitungsschachts angepasst werden können.

Fig. 2 zeigt ferner, dass der Isolationskörper 10 der Stromschiene 1"' mit einer Abschirmung 61 versehen werden kann, die durch elektrische Ströme verursachte Magnetfelder nach aussen abschirmt, sodass keinerlei störende Auswirkungen auf den Anwender oder elektrische Geräte verbleiben. Z.B. wird die Stromschiene 1"' mit einem Mantel aus einem Spezialblech oder einer Spezialfolie versehen. Vorzugsweise werden Spezialfolien in der Art verwendet, die unter den Bezeichnungen MUMETALL, VITROVAC, VITROPERM bekannt sind. Alternativ werden Abschirmungen verwendet, die aus Nickel-Eisen-Legierungen oder Kobalt-Eisen-Legierungen bestehen. Durch die beschriebene Abschirmung für alle Stromschienen 1, 1', 1", 1'" des Stromschienensystems 100 gelingt somit eine vollständige Abschirmung der Energieverteilungsvorrichtung bis zu den Verbrauchern. Entsprechende Vorschriften, wie EMV-Vorschriften, werden daher stets eingehalten. Vorzugsweise werden auch die Stromschienenkupplungen 9 mit Abschirmungen versehen.

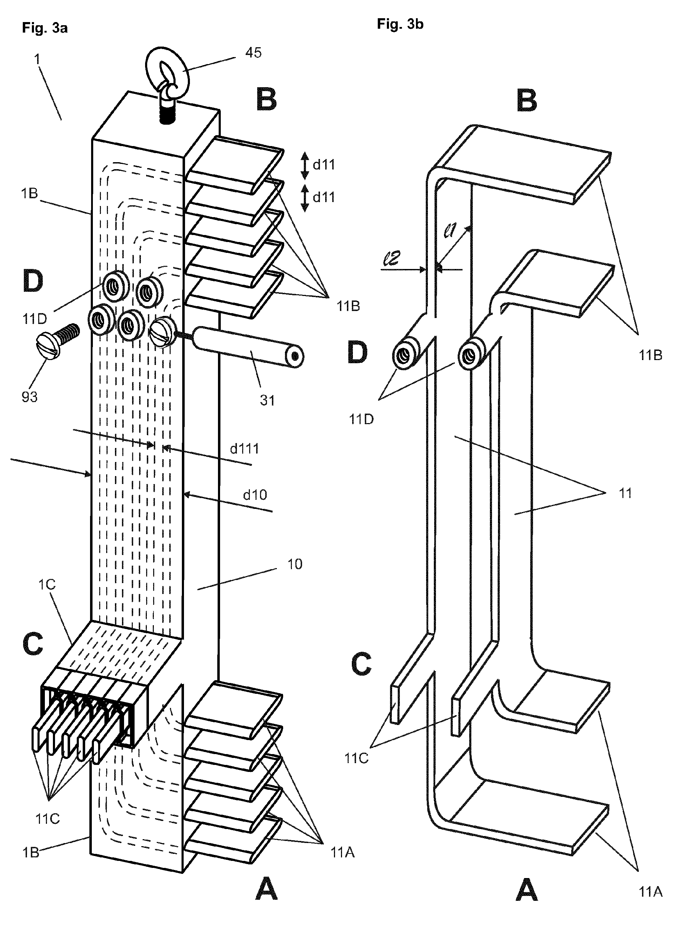

Fig. 3a zeigt eine vorzugsweise ausgestaltete Stromschiene 1 mit U-profilförmigen Leitungsstäben 11, die in gegenüberliegenden ersten und zweiten Endstücken 1A, 1B zu Anschlussbereichen A und B verlaufen und dort noch innerhalb des Stromschienenkörpers 10 um 90° in dieselbe Richtung umgebogen sind. Die Enden der Leitungsstäbe 11 mit den Anschlüssen 11A, 11B verlaufen parallel zueinander und treten seitlich aus dem Stromschienenkörper 10 hervor.

Zwischen den ersten beiden Endstücken 1A, 1B ist optional ein drittes Endstück 1C mit Anschlüssen 11C in einem dritten Anschlussbereich C und dritten Anschlüssen 11C vorgesehen. Diese wurden vor dem Giessen einstückig mit den Leitungsstäben 11 verbunden oder mit diesen verschweisst oder verschraubt. Dieser dritte Anschlussbereich C wurde zum ersten Anschlussbereich A hin verschoben.

Beim zweiten Anschlussbereich B ist wiederum optional ein vierter Anschlussbereich D mit fünf Anschlüssen bzw. Anschlussstutzen 11D vorgesehen, in die Anschlussschrauben 93 einsetzbar sind. Mittels der Anschlussschrauben 93 können Anschlusskabel bzw. deren Kabelschuhe 31 fest gezogen werden. Die die vierten Anschlüsse 11D werden vorzugsweise im Stromschienenkörper 10 versenkt, sodass sie mit geringem Aufwand vergossen werden können.

Wahlweise kann die Stromschiene 1 daher ohne die Anschlussbereiche C und D oder mit Anschlussbereich C und/oder D gefertigt werden. Die Anschlussbereiche C und/oder D werden zentrisch oder exzentrisch auf derselben oder auf gegenüberliegenden Seiten vorgesehen.

Fig. 3b zeigt den ersten und den fünften Leitungsstab 11 der Stromschiene 1 von Fig. 3a, die in diesem Ausführungsbeispiel einstückig miteinander verbundene erste, zweite sowie optionale dritte und vierte Anschlüsse 11A, 11B bzw. 11C, 11D aufweisen.

Die Leitungsstäbe 11, die einen zumindest annähernd rechteckförmigen Querschnitt mit einer längeren Rechteckseite 11 und einer kürzeren Rechteckseite 12 können in einfacher Weise gefertigt, d.h. zugeschnitten und gebogen werden. Die Biegung erfolgt vorzugsweise um eine Biegeachse, die parallel zur Längsachse der Stromschiene und parallel zur längeren Rechteckseite 12 verläuft. In der Folge werden die Leitungsstäbe 11 in den Stromschienenkörper 10 eingegossen.

In Fig. 3a sind die Abstände d11 zwischen den einzelnen Anschlüssen 11A, 11B gezeigt, die in einem weiten Bereich unabhängig vom Durchmesser d10 des Stromschienenkörpers 10 frei wählbar sind. Die Anschlüsse 11A, 11B können daher derart beabstandet werden, dass sie bequem mit den Anschlüssen einer anschliessenden Stromschiene verbunden werden können. Ein Auffächern der Anschlüsse 11A, 11B ist nicht notwendig.

Ferner kann die Stromschiene 1 nun an der Unterseite und der Oberseite mit Montageelementen 45, wie Haken oder dergleichen, versehen werden, sodass sie vorteilhaft gehandhabt, z.B. mit einem Kran gehalten und senkrecht in einen Schacht abgesenkt werden kann.

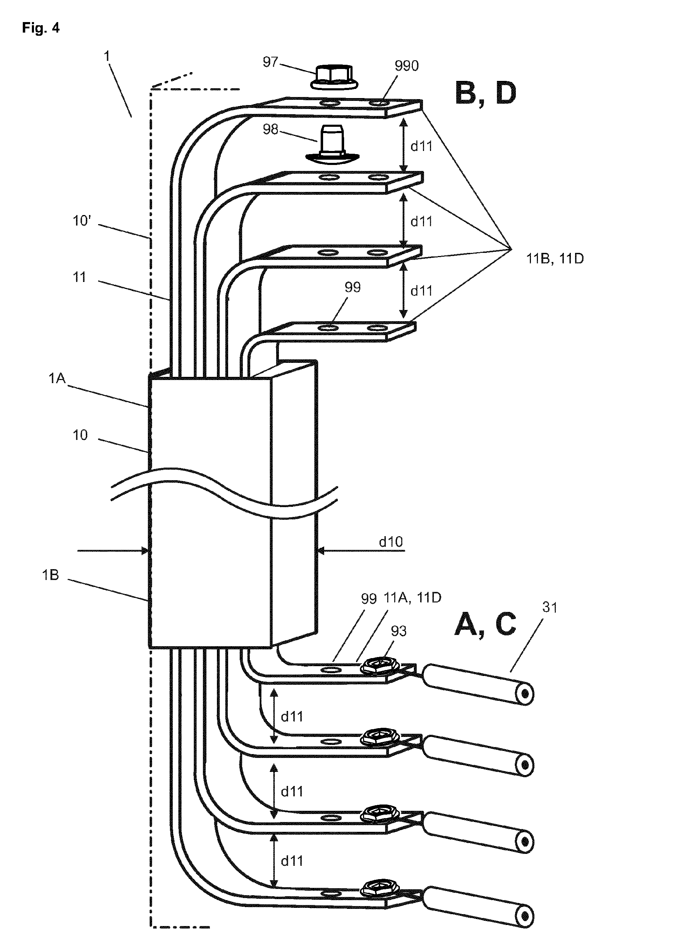

Fig. 4 zeigt eine erfindungsgemässe Stromschiene 1 mit vier Leitungsstäben 11, die unten und oben axial aus den Endstücken 1A, 1B nach aussen treten und ausserhalb des Stromschienenkörpers 10 um 90° in dieselbe Richtung gebogen sind und in den Anschlussbereichen A und B parallel zueinander verlaufen. Diese Stromschiene 1 weist dieselben Vorteile auf, wie die Stromschiene von Fig. 3a. Da der Stromschienenkörper 10 jedoch verkürzt ist, sind die Anschlüsse 11A, 11B leichter zugänglich und können auch kürzer ausgebildet sein. Ferner können die freiliegenden elektrischen Leiter 11 bereits mit einer Elastizität versehen werden, die es erlaubt, auftretende Temperaturdehnungen zu kompensieren. Die Anschlüsse 11A, 11B der Stromschiene von Fig. 3a und Fig. 4 können auch in entgegengesetzte Richtungen gebogen sein, sodass die Leitungsstäbe S- oder Z-förmig ausgebildet sind. Die strichpunktierte Linie symbolisiert den verlängerten Stromschienenkörper 10' von Fig. 3a. Durch Wahl der entsprechenden Matrize kann daher wahlweise die Stromschiene 1 von Fig. 3a oder von Fig. 4 gefertigt werden.

Fig. 4 zeigt ferner, dass die Anschlüsse 11A, 11B mit ersten und zweiten Bohrungen 99 und 990 versehen sind. Die ersten Bohrungen 99 dienen der Aufnahme von Schrauben 98 mittels denen die Stromschiene 1 mit einer benachbarten Stromschiene 1' verbindbar ist. Die zweiten Bohrungen 93 dienen der Aufnahme von Anschlussschrauben 93, mittels denen Anschlusskabel 31 bzw. damit verbundene Kabelschuhe festgeschraubt werden können. Die ersten und zweiten Anschlüsse 11A, 11B dienen daher zusätzlich als dritte bzw. vierte Anschlüsse 11C, 11D.

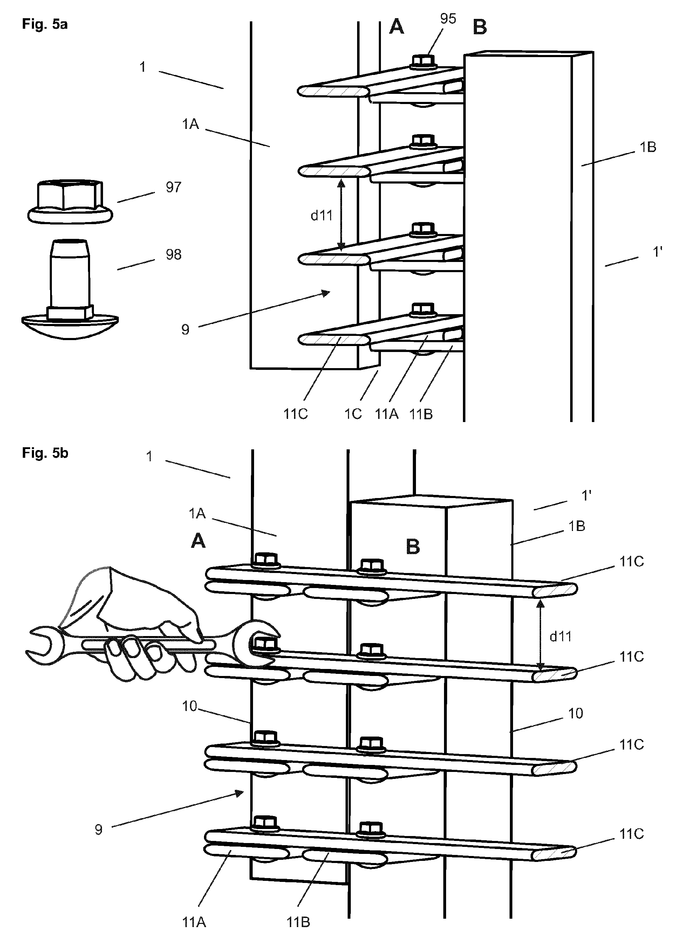

Fig. 5a zeigt zwei miteinander verbundene Stromschienen 1, 1' gemäss Fig. 3a, deren erste bzw. zweite Anschlüsse 11A, 11B, die gegeneinander gerichtet sind, miteinander sowie mit dritten Anschlüssen 11C verbunden sind. Nach dem Vergiessen der Stromschienenkupplung 9 resultiert eine zusammengesetzte Stromschiene mit zwei äusseren Anschlussbereichen A und B (nicht gezeigt) und einem dritten Anschlussbereich C mit den dritten Anschlüssen 11C. Fig. 5a zeigt ferner eine Schraube 98 und eine Schraubenmutter 97, durch die Anschlüsse 11A, 11B und 11C miteinander verbunden werden können.

Fig. 5b zeigt zwei nebeneinander und überlappend angeordnete Stromschienen 1, 1', deren erste bzw. zweite Anschlüsse 11A, 11B, die parallel zueinander ausgerichtet sind, miteinander sowie mit dritten Anschlüssen 11C verbunden sind. Aufgrund des relativ gross gewählten Abstands d11 zwischen den Anschlüssen 11A bzw. 11B kann mit einem Werkzeug bequem eingegriffen werden. Besonders vorteilhaft ist auch, dass die Anschlüsse 11A, 11B und 11C dem Installateur zugewandt sind. Die Stromschienenkörper 10 liegen parallel aneinander an und können vorteilhaft miteinander verbunden werden. Z.B. weisen die Stromschienenkörper 10 zueinander komplementäre Formteile auf, die ineinander verschoben werden können und einander formschlüssig halten. In diesem Falle können die Stromschienen 1 ohne weitere Verbindungsmittel modular zusammengesetzt werden.

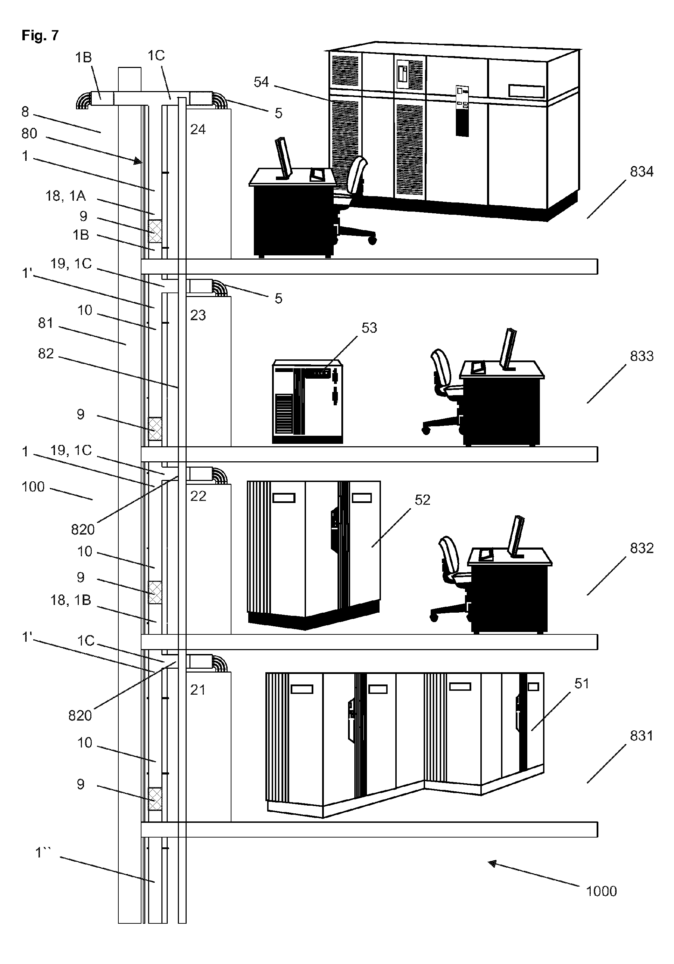

Die Anschlüsse 11C, die in den Figuren 5a und 5b in Schnittdarstellung gezeigt sind, sind z.B. die Anschlüsse einer Stromschiene 1C bzw. eines Stromschienenastes, der aus dem Leitungsschacht 80 hinaus in einen Gebäuderaum geführt wird (siehe Fig. 7). Alternativ können die dritten Anschlüsse 11C auch als Anschlusskontakte oder Kabelschuhe dienen, die mit flexiblen Leitungen 31 verbunden sind (siehe Figur 3a, Anschlussbereich D). Alle Anschlüsse 11A, 11B, 11C werden in der Folge vergossen, so dass eine dicht abgeschlossene Stromschienenkreuzung oder ein dicht abgeschlossener Abschlusskopf bzw. Abschlusszwischenkopf mit Leitungen 31 resultiert (siehe Fig. 2).

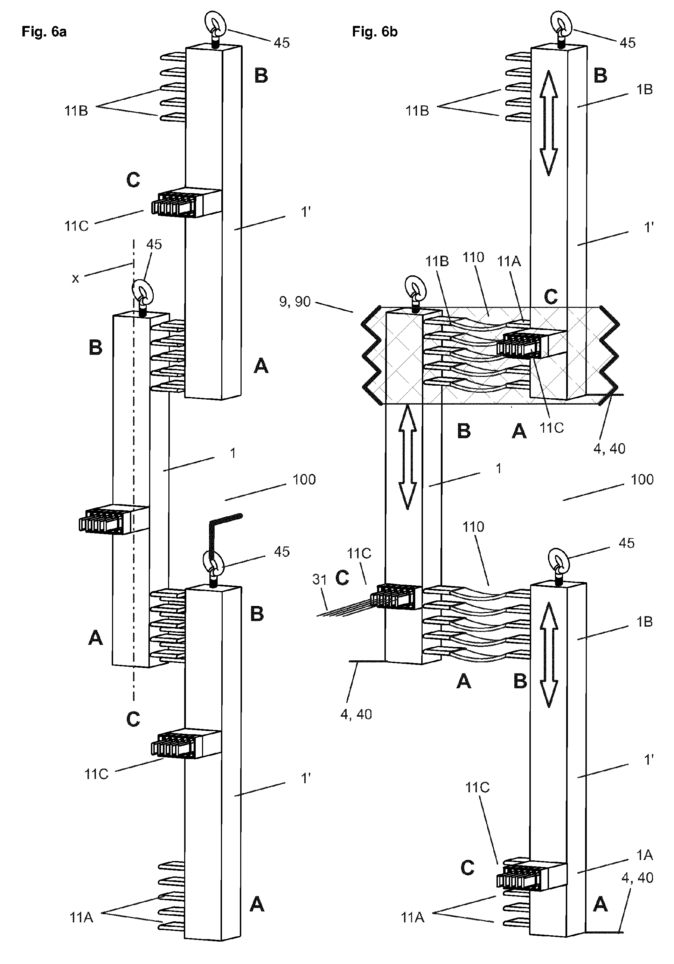

Fig. 6a zeigt ein erfindungsgemässes Stromschienensystem 100 mit Stromschienen 1, 1', deren Anschlüsse 11A, 11B, wie in Fig. 3a gezeigt, direkt und fest miteinander verbunden sind. Die Stromschienen 1, 1' sind mit Montageelementen 45 versehen, mittels denen die Stromschienen 1, 1' transportiert und/oder fixiert werden können. Die Montageelemente können auch am Stromschienenkörper 10 angeformt sein. Die dritten Anschlussbereiche C können, wie gezeigt, in der Mitte der Stromschienen 1, 1' oder auch exzentrisch angeordnet sein, falls mit Temperaturdehnungen zu rechnen ist. In diesem Fall wird z.B. die Ausgestaltung von Fig. 6b realisiert. Die Verbindung der Anschlüsse 11A, 11B und gegebenenfalls zusätzlichen Anschlüssen 11C erfolgt z.B. wie in Fig. 5a gezeigt.

Fig. 6b zeigt ein erfindungsgemässes Stromschienensystem 100 mit Stromschienen 1, 1' gemäss Fig. 3a, deren Anschlüsse 11A, 11B durch elastische Leiter 110 miteinander verbunden sind. Die Stromschienen 1, 1' sind auf Ausleger 4 oder gemauerte Elemente 40 abgestützt. An die dritten Anschlüsse 11C der Stromschienen 1, 1' sind weitere Stromschienen oder Anschlusskabel 31 abschliessbar. Ferner ist schematisch gezeigt, dass die oberen beiden Stromschienen 1, 1' durch eine Stromschienenkupplung 9 miteinander verbunden sind, die einen dehnbaren Balg 90 aufweist, in den vorzugsweise eine elastische Gussmasse eingefügt ist.

Fig. 7 zeigt eine Gebäudeinstallation 1000 mit einem erfindungsgemässen Stromschienensystem 100 für die Energieverteilung in einem Gebäude 8, das mehrere Etagen 831, 832, 833, 834 aufweist, in denen elektrische Geräte 51, 52, 53, 54 je an einen zugehörigen Energieabnehmer, z.B. einen Energieverteiler, Unterverteiler oder Leistungsschalter 21, 22, 23, 24 angeschlossen sind. Das Stromschienensystem 100 kann wahlweise aus den oben beschriebenen und entsprechend dimensionierten Stromschienen 1, 1", 1"' zusammengesetzt werden. Vorzugsweise wird das Stromschienensystem von Fig. 6b eingesetzt.

Das gezeigte Stromschienensystem 100 umfasst vier Stromschienen 1, 1' und eine konventionelle Stromschiene 1", die in einem Leitungsschacht 80 koaxial und vertikal nach oben geführt sind. Der Leitungsschacht 80 ist angrenzend an eine Aussenwand 81 des Gebäudes 8 vorgesehen und durch eine Schachtwand 82 innerhalb des Gebäudes 8 weiter begrenzt. Die Schachtwand 82 bildet gleichzeitig eine Gebäudeinnenwand und ist mit Maueröffnungen 820 versehen, die je einen Zugang zu einer zugehörigen Gebäudeetage 831, ..., 834 schaffen.

Die Stromschienen 1, 1' bilden einen im Leitungsschacht 80 vertikal nach oben geführten Leitungsstamm 18, von dem Leitungsäste 19 bzw. dritte Endstücke der Stromschienen 1, 1' durch die Maueröffnungen 820 hindurch je in eine der Gebäudeetagen 831, ..., 834 geführt werden. Die konventionelle Stromschiene 1" von Fig. 1 dient der Führung elektrischer Energie auf die Höhe der ersten Etage 831.

Vorzugsweise sind wenigstens zwei der Stromschienen 1, 1' durch eine elastische Stromschienenkupplung 9 miteinander verbunden, die wenigstens einen deformierbaren elektrischen Leiter 110 aufweist, durch den die Anschlussbereiche A, B der einander zugewandten Endstücke 1A, 1B der beiden Stromschienen 1, 1' derart miteinander verbunden sind, dass auftretende Temperaturdehnungen der Stromschienen 1, 1' kompensiert werden.

Das Stromschienensystem 100 weist einen ersten Leitungsast 19 auf, der durch eine der Maueröffnung 820 hindurch zu einem Energieabnehmer 21 in der ersten Etage 831 geführt ist. Der Leitungsstamm 18 dieser Stromschiene 1 führt innerhalb des Leitungsschachts 80 weiter auf die Höhe der zweiten Etage 832 und ist dort mit der nachfolgenden Stromschiene 1 verbunden, die einen zweiten Leitungsast 19 aufweist, der durch eine Maueröffnung 820 zu einem Energieabnehmer 22 in der zweiten Etage 832 geführt ist. Diese Stromschiene 1 führt innerhalb des Leitungsschachts 80 weiter auf die Höhe der dritten Etage 833 und ist dort mit der nächsten Stromschiene 1' verbunden, die über einen dritten Leitungsast 19 mit einem Energieabnehmer 23 in der dritten Etage 833 und über den Leitungsstamm 18 und eine Stromschienenkupplung 9 mit der letzten erfindungsgemässen Stromschiene 1 verbunden ist. Der relativ kurze Leitungsstamm 18 mit den beiden Endstücken 13a und 13b ist horizontal ausgerichtet, während der lange Leitungsast 19 vertikal in den Leitungsschacht 80 hineinragt und in die Stromschienenkupplung 9 hineingeführt ist. Das erste Endstück 13a führt zu einem Energieabnehmer 24 in der vierten Etage 834 und das zweite Endstück 13b führt zu einem weiteren hier nicht dargestellten Gebäudeteil oder in einen Raum auf der gegenüberliegenden Seite des Leitungsschachts 80.

Innerhalb des Leitungsschachts 80 befinden sich somit nur vergossene Stromschienen 1', 1 und vergossene Stromschienenkupplungen 9. Die an die Leitungsäste 19 bzw. dritten Endstücke 1C angeschlossenen Abschlussköpfe 5 sind ausserhalb des Leitungsschachts 80 angeordnet und sind vorzugsweise ebenfalls vergossen, sodass nur die isolierten Kabel 31, ..., 35 in die Energieabnehmer 21, 22, 23, 24 hineingeführt werden. Innerhalb des Leitungsschachts 80 ist daher der maximale Sicherheitsgrad, z.B. IP 68, gewährleistet. Mit Systemstörungen ist innerhalb des Leitungsschachts 80 auch dann nicht zu rechnen, falls ein Wasserrohrbruch auftreten sollte. Im Falle eines Feuers wird der maximal mögliche Funktionserhalt gewährleistet. Da keine Anschlusskästen, Anschlussstellen oder weitere Schwachstellen innerhalb des Leitungsschachts 80 vorhanden sind, können Störungen durch mangelhafte Kontaktierung, Oxidation, Wassereinbruch oder Feuer praktisch ausgeschlossen werden.

Durch die elastischen Stromschienenkupplungen 9 werden Temperaturdehnungen aufgefangen, sodass selbst im Brandfall keine störenden Kräfte auf das Stromschienensystem 100 einwirken. Die Leitungsäste 19 bzw. die dritten Endstücke 1C, die vorzugsweise auf einem Mauerstück oder einem Ausleger abgestützt sind, bleiben daher beim Auftreten von Temperaturdehnungen unbewegt, weshalb auf daran anschliessende Kontakte kein Zug oder Druck ausgeübt wird.

Sofern keine Erweiterung des Stromnetzes erforderlich ist, muss nach der Installation der Stromschienen 1 kaum mehr in den Leitungsschacht 80 eingegriffen werden. Das erfindungsgemässe Stromschienensystem 100 kann daher "ewig" eingemauert werden, sodass es einen festen Bestandteil des Gebäudes 8 bildet.

Nach der Installation der Stromschienen 1 können notwendige Wartungsarbeiten und Modifikationen bequem in den Gebäudeetagen 831, ..., 834 durchgeführt werden. Für Erweiterungen der Gebäudeinstallation 1000 werden gegebenenfalls Blindanschlüsse der Stromschienen 1 freigelegt und genutzt.

Das erfindungsgemässe Stromschienensystem 100 weist daher hinsichtlich der Montage, der Wartung, der späteren Erweiterung und insbesondere auch hinsichtlich der Gebäudestruktur und des Gebäudemanagements wesentliche Vorteile auf. Dem Architekten steht ein Bauteil zur Verfügung, welches vorteilhaft in das Gebäude integriert werden kann und dazu nur wenig Raum in Anspruch nimmt.

### Literaturverzeichnis

[1] Produktkatalog "Niederspannungs-Schienenverteiler LANZ HE 2.5.2" der LANZ OENSINGEN AG vom September 2009
[2] EP1928066A2,
[3] Produktkatalog von Eta-com: "Cast Resin Insulated Busway System", 27.11.2014
[4] E-LINE MK Busbar Systems 100-160-225A, www.eae.com.tr

## Patentansprüche

1. Stromschiene (1) mit Leitungsstäben (11),
a) die einen zumindest annähernd rechteckförmigen Querschnitt mit einer längeren Rechteckseite (l1) und einer kürzeren Rechteckseite (12) aufweisen;
b) die von einem ersten Anschlussbereich (A) an einem ersten Endstück (1A) der Stromschiene (1, 1') zu wenigstens einem zweiten Anschlussbereich (B) an einem zweiten Endstück (1B) der Stromschiene (1) geführt sind;
c) die endseitig erste und zweite Anschlüsse (11A, 11B) bilden; und
d) die derart in einen Stromschienenkörper (10) eingegossen sind, dass zumindest die ersten und zweiten Anschlüsse (11A, 11B) frei liegen;
**dadurch gekennzeichnet, dass** die Leitungsstäbe (11) im ersten Anschlussbereich (A) und die Leitungsstäbe (11) im zweiten Anschlussbereich (B) vorzugsweise um 90° je um eine Biegeachse umgebogen sind, so dass die ersten und zweiten Anschlüsse (11A, 11B) auf die eine oder andere Seite des Stromschienenkörpers (10) ausgerichtet und zur seitlichen Kontaktierung einer weiteren Stromschiene (1') vorgesehen sind.

2. Stromschiene (1) nach Anspruch 1, **dadurch gekennzeichnet, dass** der Abstand (d11) zwischen benachbarten Leitungsstäben (11) ausserhalb des Stromschienenkörpers (10) um einen Faktor n grösser ist, als der Abstand (d111) zwischen benachbarten Leitungsstäben (11) innerhalb des Stromschienenkörpers (10), wobei der Faktor n vorzugsweise in einem Bereich zwischen 1.5 und 5 oder höher liegt.

3. Stromschiene (1) nach Anspruch 1 oder 2, **dadurch gekennzeichnet, dass** die Biegeachsen der Leitungsstäbe (11) innerhalb oder ausserhalb des Stromschienenkörpers (10) liegen oder dass ein Teil der Biegeachsen innerhalb und ein anderer Teil der Biegeachsen ausserhalb des Stromschienenkörpers (10) liegt.

4. Stromschiene (1) nach einem der Ansprüche 1 - 3, **dadurch gekennzeichnet, dass** die Anschlüsse (11A, 11B) unbearbeitete Endstücke der Leitungsstäbe (11) oder bearbeitete Endstücke der Leitungsstäbe (11) sind, die eine erste Bohrung zur Aufnahme einer Verbindungsschraube (98) und/oder eine zweite Bohrung, gegebenenfalls eine Gewindebohrung, zur Aufnahme einer Anschlussschraube (93) aufweist, mittels der ein Kabelschuh eines Anschlusskabels (31) montierbar ist.

5. Stromschiene (1) nach einem der Ansprüche 1 - 4, **dadurch gekennzeichnet, dass** der Stromschienenkörper (10) quaderförmig ausgebildet ist und dass die ersten und zweiten Anschlüsse (11A, 11B) an der Frontseite und/oder der Rückseite des Stromschienenkörper (10) angeordnet sind und dass dritte und/oder vierte Anschlüsse (11C, 11D) um 90° versetzt an einer der Seiten zwischen der Frontseite oder Rückseite des Stromschienenkörpers (10) angeordnet sind.

6. Stromschiene (1) nach Anspruch 5, **dadurch gekennzeichnet, dass** die dritten und oder vierten Anschlüsse (11C, 11D) mit den Leitungsstäben (11) vorzugsweise einstückig, durch eine Schraubverbindung oder durch Schweissen verbunden sind und als Stäbe (11C) oder Schraubanschlüsse (11D) ausgebildet sind.

7. Stromschiene (1) nach Anspruch 5, **dadurch gekennzeichnet, dass** die dritten und oder vierten Anschlüsse (11C, 11D) zentrisch oder exzentrisch beim ersten oder zweiten Anschlussbereich (A, B) angeordnet sind.

8. Stromschiene (1) nach einem der Ansprüche 1 - 7, **dadurch gekennzeichnet, dass** der Stromschienenkörper (10) vorzugsweise an dessen Oberseite einstückig mit wenigstens einem Formelement oder mit wenigstens einem eingesetzten Halteelement (45) versehen ist, das an Formelemente oder Halteelemente (45) benachbarter Stromschienen (1') oder an Haltevorrichtungen oder Werkzeuge (4, 40) ankoppelbar ist, mittels denen die Stromschiene (1) manipulierbar oder fixierbar ist.

9. Stromschienensystem (100) zur Energieverteilung mit wenigstens einer ersten und einer zweiten Stromschiene (1, 1') nach einem der Ansprüche 1 - 8, **dadurch gekennzeichnet, dass** die beiden Stromschienen (1, 1') durch eine Stromschienenkupplung (9) miteinander verbunden sind, die wenigstens einen deformierbaren elektrischen Leiter (110) aufweist, durch den die Anschlüsse (11A, 11B) der einander zugewandten Stromschienen (1, 1') derart miteinander verbunden sind, dass Temperaturdehnungen der Stromschienen (1, 1') kompensierbar sind.

10. Stromschienensystem (100) nach Anspruch 9, **dadurch gekennzeichnet, dass** der wenigstens eine elastische elektrische Leiter (110) als elastischer Metallbügel oder als Metallband ausgebildet ist, das gegebenenfalls eine Laminatstruktur mit mehreren metallenen Lagen aufweist.

11. Stromschienensystem (100) nach Anspruch 9 oder 10, **dadurch gekennzeichnet, dass** die miteinander gekoppelten und in der Stromschienenkupplung (9) vergossenen Anschlüsse (1A, 1B) der beiden Stromschienen (1, 1') mit einer dritten Stromschiene oder mit Anschlusskabeln (31) verbunden sind, die ein drittes Endstück (1C) der miteinander verbundenen ersten und zweiten Stromschiene (1, 1') bildet.

12. Stromschienensystem (100) nach einem der Ansprüche 9 - 11, **dadurch gekennzeichnet, dass** eine Kopplungshülse (90) vorgesehen ist, welche die Stromschienenkupplung (9) überdeckt und auf jeder Seite mit dem zugehörigen Endstück (1A, 1B) der betreffenden Stromschiene (1, 1') vorzugsweise durch eine Schweissnaht, eine Gussverbindung, eine Rastvorrichtung oder eine formschlüssige Pressverbindung dicht abschliessend verbunden ist.

13. Stromschienensystem (100) nach Anspruch 12, **dadurch gekennzeichnet, dass** die Kopplungshülse (90) als Balg ausgebildet ist und/oder dass die Kopplungshülse (90) mit einer elastischen Dichtungsmasse, vorzugsweise einer Silikonmasse zumindest teilweise gefüllt ist.

14. Stromschienensystem (100) nach einem der Ansprüche 9 - 13, **dadurch gekennzeichnet, dass** die miteinander verbundenen Stromschienen (1) in einem vertikal ausgerichteten Leitungsschacht (80) angeordnet ist, der mit Maueröffnungen (820) versehenen ist, durch die von den Stromschienen (1) abgezweigte elektrische Leitungen (1C, 31), die als Stromschienen (1C) oder Kabel (31) ausgebildet mit geschraubten und vergossenen elektrischen Verbindungen in das Stromschienensystem (100) eingebunden sind, in einen vom Leitungsschacht (80) getrennten Raum zu einem Energieabnehmer oder Energieverteiler (21, ..., 24) geführt sind,

15. Stromschienensystem (100) nach Anspruch 14, **dadurch gekennzeichnet, dass** die aus dem Leitungsschacht (80) hinausgeführten dritten Endstücke (1C) der Stromschienen (1, 1') oder die aus dem Leitungsschacht (80) hinausgeführten mit einer Stromschienenkupplung (9) verbundenen Stromschienen (1C) innerhalb des Leitungsschachts (80) je von einer Stütze (4) oder einem Element der Schachtmauer (40) auf konstanter Höhe gehalten sind.
